# EUROPÄISCHE PATENTSCHRIFT

(11) **EP 4 596 802 B1**
(45) Veröffentlichungstag und Bekanntmachung des Hinweises auf die Patenterteilung: **19.08.2026**
(21) Anmeldenummer: 24215835.0
(22) Anmeldetag: 27.11.2024
(51) Int. Cl.: E03C 1/02, B05B 1/16, E03C 1/04

(54) **SANITÄRE FLUIDUMSTELLVORRICHTUNG UND SANITÄRBRAUSE**
SANITARY FLUID DIVERTER AND SANITARY SHOWER
INVERSEUR SANITAIR DE FLUIDE ET DOUCHE SANITAIRE

(30) Priorität: 30.01.2024 DE 102024102538
(43) Veröffentlichungstag der Anmeldung: 06.08.2025
(73) Patentinhaber: Hansgrohe SE, 77761 Schiltach (DE)
(72) Erfinder: Neff, Leo, 78730 Lauterbach (DE); Glunk, Günter, 78737 Fluorn-Winzeln (DE); Woll, Matthias, 77652 Offenburg (DE)
(74) Vertreter: Patentanwälte Ruff, Wilhelm, Beier, Dauster & Partner mbB

(56) Entgegenhaltungen:
- US-A1- 2021 222 780
- US-B2- 9 387 494

## Beschreibung

Die Erfindung bezieht sich auf eine sanitäre Fluidumstellvorrichtung nach dem Oberbegriff des Anspruchs 1 und auf eine damit ausgerüstete Sanitärbrause nach dem Oberbegriff des Anspruchs 7.

Die sanitäre Fluidumstellvorrichtung umfasst demgemäß einen Basiskörper mit einem Fluideinlass, mindestens einem ersten und einem zweiten Fluidauslass, einem ersten Fluidweg vom Fluideinlass zum ersten Fluidauslass und einem zweiten Fluidweg vom Fluideinlass zum zweiten Fluidauslass sowie ein im Basiskörper zwischen einer ersten und einer zweiten Einstellposition beweglich angeordnetes Umstellelement zum wahlweisen Absperren und Freigeben des ersten und des zweiten Fluidweges. Das Umstellelement gibt in der ersten Einstellposition den ersten Fluidweg zumindest partiell frei und sperrt den zweiten Fluidweg zumindest partiell ab, während es in der zweiten Einstellposition den ersten Fluidweg zumindest partiell absperrt und den zweiten Fluidweg zumindest partiell freigibt. In speziellen Ausführungen gibt das Umstellelement in der ersten Einstellposition den ersten Fluidweg vollständig bzw. maximal frei und/oder sperrt den zweiten Fluidweg vollständig ab und/oder sperrt in der zweiten Einstellposition den ersten Fluidweg vollständig ab und/oder gibt den zweiten Fluidweg vollständig bzw. maximal frei. Es versteht sich, dass die Fluidumstellvorrichtung über die beiden genannten Fluidauslässe hinaus je nach Bedarf und Anwendungsfall einen oder mehrere weitere Fluidauslässe aufweisen kann, zwischen denen der Benutzer mit Hilfe des Umstellelements umschalten kann.

Mit dieser Fluidumstellvorrichtung kann ein über den Fluideinlass zugeführtes Fluid, wie Wasser, wahlweise über den ersten Fluidweg am ersten Fluidauslass und/oder über den zweiten Fluidweg am zweiten Fluidauslass abgegeben werden. Wenn das Umstellelement in der jeweiligen Einstellposition einen der Fluidwege vollständig absperrt, wird das Fluid nur am anderen Auslass abgegeben, bei nur partieller Absperrung kann das Fluid auf beide Auslässe aufgeteilt werden. Aufgrund dieser Funktionalität werden derartige Fluidumstellvorrichtungen beispielsweise in Form von handbetätigten Fluidumstellventilen in Badewannenarmaturen, um Wasser wahlweise an einem Wannenauslauf oder einer Handbrause abzugeben, sowie in Kopf- und Handbrausen verwendet, die zur wahlweisen Abgabe eines Brausestrahls in unterschiedlichen Strahlarten ausgelegt sind. Mittels des Umstellventils kann der Benutzer die jeweils gewünschte Brausestrahlart einstellen bzw. zwischen den verschiedenen Brausestrahlarten wechseln.

Herkömmlicherweise bildet dazu das Umstellelement einen beweglichen Ventilkörper, der vom Benutzer über einen zugeordneten Bedienmechanismus betätigt werden kann. Der Bedienmechanismus beinhaltet ein dem Benutzer zur Betätigung zugängliches Bedienelement, das somit als Nutzerschnittstelle des Bedienmechanismus fungiert, und einen Übertragungsmechanismus, der die Betätigung des Bedienelements durch den Benutzer auf das Umstellelement überträgt, das beispielsweise als ein verdrehbarer und/oder axial beweglicher Ventilscheibenkörper konfiguriert sein kann. Fluidumstellvorrichtungen dieser Art, bei denen ein Druckknopf als Nutzerschnittstelle und ein scheibenförmiger, drehbeweglicher und in manchen Fällen zusätzlich axialbeweglicher Ventilkörper als Umstellelement fungieren, sind in den Patentschriften DE 101 37 611 C1, US 6.622.945 B1, EP 2 213 918 B1 und DE 10 2016 213 489 B3 offenbart.

Der Erfindung liegt als technisches Problem die Bereitstellung einer sanitären Fluidumstellvorrichtung der eingangs genannten Art, die gegenüber dem oben erwähnten Stand der Technik neuartige, vorteilhafte Funktionalitäten bietet, und einer Sanitärbrause mit einer solchen Fluidumstellvorrichtung zugrunde. Weitere Fluidumstellvorrichtungen sind z.B. in US20221222780A und US9387494B offenbart.

Die Erfindung löst dieses Problem durch die Bereitstellung einer sanitären Fluidumstellvorrichtung mit den Merkmalen des Anspruchs 1 und einer Sanitärbrause mit den Merkmalen des Anspruchs 7. Vorteilhafte Weiterbildungen der Erfindung sind in den Unteransprüchen angegeben, deren Wortlaut hiermit durch Verweis zum Bestandteil der Beschreibung gemacht wird. Dies schließt insbesondere auch alle Ausführungsformen der Erfindung ein, die sich aus den Merkmalskombinationen ergeben, die durch die Rückbezüge in den Unteransprüchen definiert sind.

Die erfindungsgemäße sanitäre Fluidumstellvorrichtung beinhaltet ein am Umstellelement ausgebildetes, nutzerzugängliches Betätigungsglied zum nutzerbetätigten Bewegen des Umstellelements zwischen der ersten und der zweiten Umstellposition und eine nutzerbetätigt zwischen einer Sperrstellung und einer Freigabestellung verstellbare Verdrehsicherung, die in der Sperrstellung das Umstellelement gegen nutzerbetätigtes Bewegen zwischen der ersten und der zweiten Einstellposition sperrt und in der Freigabestellung das Umstellelement zum nutzerbetätigten Bewegen zwischen der ersten und der zweiten Einstellposition freigibt.

Charakteristischerweise ist das nutzerzugängliche Betätigungsglied, über das der Benutzer das Umstellelement zum Bewirken der Umstellfunktion in Bewegung versetzen kann, bei dieser Fluidumstellvorrichtung am Umstellelement selbst ausgebildet. Ein Übertragungsmechanismus zwischen diesem für den Benutzer zugänglichen Betätigungsglied und dem die gewünschte Fluidumstellung bewirkenden Umstellelement entfällt daher, was die Komplexität der Fluidumstellvorrichtung entsprechend gering hält.

Des Weiteren verfügt diese Fluidumstellvorrichtung charakteristischerweise über die vom Benutzer betätigbare Verdrehsicherung, durch welche der Benutzer dafür sorgen kann, dass das Umstellelement in seiner momentanen Einstellposition verbleibt und nicht verstellt werden kann. Wenn sich die Verdrehsicherung in der entsprechenden Sperrstellung befindet, kann der Benutzer das Umstellelement auch nicht über das Betätigungsglied bewegen. Vielmehr hat er dazu zunächst die Verdrehsicherung in die Freigabestellung zu verbringen, die dann das nutzerbetätigte Bewegen des Umstellelements über das Betätigungsglied freigibt.

Die erfindungsgemäße Fluidumstellvorrichtung lässt sich beispielsweise sehr vorteilhaft für Sanitärbrausen verwenden, deren Aufbau grundsätzlich für eine wahlweise Abgabe des Brausestrahls in verschiedenen Brausestrahlarten ausgelegt ist, die aber im jeweils gedachten Einsatzfall primär nur in einer dieser Brausestrahlarten betrieben werden sollen. Der Benutzer, in diesem Fall ggf. auch der Hersteller oder Monteur, kann in dieser Anwendung die Sanitärbrause dadurch auf die gewünschte Strahlart dauerhaft einstellen, dass er das Umstellelement über das ihm zugängliche Betätigungsglied in die zugehörige Einstellposition verbringt, wenn sich die Verdrehsicherung in der Freigabestellung befindet, und anschließend durch Verstellen der Verdrehsicherung in die Sperrstellung dafür sorgt, dass das Umstellelement diese Einstellposition beibehält. Diese Nutzung der erfindungsgemäßen Fluidumstellvorrichtung ist insbesondere dann zweckmäßig, wenn ein und dieselbe Sanitärbrause nie oder allenfalls selten zwischen den Brausestrahlarten umgestellt werden soll.

So kann beispielsweise ein Kopfbrausenmodell oder Handbrausenmodell, dessen Aufbau wahlweise zur Abgabe des Brausestrahls in einer ersten oder einer zweiten Brausestrahlart konfiguriert ist und mit der erfindungsgemäßen Fluidumstellvorrichtung ausgerüstet wird, in einem ersten Einsatzfall als Kopf-/Handbrause zur Abgabe der ersten Brausestrahlart und in einem zweiten Einsatzfall als Kopf-/Handbrause zur Abgabe der zweiten Brausestrahlart konfiguriert werden. Dabei bleibt es für den Benutzer möglich, die betreffende Brause zu einem späteren Zeitpunkt auf die jeweils andere Brausestrahlart umzustellen, indem er die Fluidumstellvorrichtung entsprechend umstellt, d.h. die Verdrehsicherung von ihrer Sperrstellung in ihre Freigabestellung verbringt und das Umstellelement am Betätigungsglied verstellend betätigt.

In einer Weiterbildung der Erfindung weist der Basiskörper eine Basiskontaktfläche mit mindestens einer ersten, zum ersten Fluidauslass führenden Abgangsöffnung und mindestens einer zweiten, zum zweiten Fluidauslass führenden Abgangsöffnung auf, und das Umstellelement beinhaltet eine die Basiskontaktfläche kontaktierende Gegenkontaktfläche mit einer Durchlassöffnungskontur, die mit dem Fluideinlass in Fluidverbindung steht und in an sich bekannter Weise eine oder mehrere Durchlassöffnungen beinhaltet. Dies stellt eine konstruktiv vorteilhafte Ausführung der Fluidumstellvorrichtung dar. Über die Durchlassöffnungskontur kann das Fluid vom Fluideinlass durch entsprechendes Einstellen des Umstellelements zum einen und/oder zum anderen Fluidauslass geführt werden. Alternativ kann das Umstellelement in an sich bekannter Weise ein nicht mit Durchlassöffnungen versehener Ventilkörper sein, der wahlweise die eine oder die andere Abgangsöffnung absperrt.

In einer Ausgestaltung der Erfindung ist das Umstellelement ein Umstelltopf mit einem Topfboden, der die Gegenkontaktfläche bildet, wobei das Betätigungsglied von einer Mantelfläche des Umstelltopfes radial nach außen absteht und die Bewegung des Umstelltopfes zwischen der ersten und der zweiten Einstellposition eine Drehbewegung um eine Längsachse des Umstelltopfes ist. Dies stellt eine konstruktiv und funktionell vorteilhafte Realisierung des Umstellelements dar. Alternativ kann das Umstellelement in anderer Weise ausgebildet sein, z.B. als drehbeweglicher Scheibenkörper oder als translatorisch bewegliches Element.

In einer weiteren Ausgestaltung der Erfindung weist der Basiskörper einen den Umstelltopf umfangsseitig umgebenden Hülsenteil mit einer in Hülsenumfangsrichtung verlaufenden Kulissenbahn auf, und das Betätigungsglied ist eine Betätigungsnase, die in die Kulissenbahn eingreift. Dies stellt eine vorteilhaft an die Konfiguration des Umstelltopfes angepasste Realisierung des Basiskörpers dar. Der Basiskörper dient hierbei gleichzeitig zur Kulissenführung des als Betätigungsnase gebildeten Betätigungsglieds. Alternativ kann für den Basiskörper ein anderer Aufbau gewählt werden, z.B. mit einem vom Umstelltopf umfangsseitig umgebenen Hülsenteil.

In einer weitergehenden Ausgestaltung der Erfindung weist die Kulissenbahn eine erste axiale Ausnehmung, in welche die Betätigungsnase eingreift, wenn sich der Umstelltopf in der ersten Einstellposition und die Verdrehsicherung in der Sperrstellung befinden und/oder eine zweite axiale Ausnehmung auf, in welche die Betätigungsnase eingreift, wenn sich der Umstelltopf in der zweiten Einstellposition und die Verdrehsicherung in der Sperrstellung befinden.

Diese Ausgestaltung hat den Vorteil, dass der Umstelltopf in der betreffenden Einstellposition gegen Wegbewegen durch das Eingreifen der Betätigungsnase in die betreffende axiale Kulissenbahnausnehmung gesichert ist. Die jeweilige axiale Ausnehmung erleichtert zudem das genaue Erreichen und Verbleiben in der entsprechenden Einstellposition. Zum Verstellen muss der Umstelltopf zunächst mit seiner Betätigungsnase axial aus dieser Ausnehmung herausbewegt werden, bevor er sich dann mit seiner Betätigungsnase in Umfangsrichtung entlang der Kulissenbahn in Richtung der anderen Einstellposition bewegen kann. Alternativ kann die Kulissenbahn ohne eine solche axiale Ausnehmung bleiben, wenn dies für den betreffenden Anwendungsfall nicht nutzbringend ist.

In noch einer weiteren Ausgestaltung der Erfindung weist die Verdrehsicherung ein am Basiskörper zwischen einer Sperrstellung und einer Freigabestellung nutzerbetätigt verstellbar anbringbares Druckelement auf, das in seiner Sperrstellung eine axiale Druckkraft auf den Umstelltopf ausübt, die ihn verdrehsichernd mit seinem Topfboden axial gegen die Basiskontaktfläche andrückt und/oder mit seiner Betätigungsnase in die erste oder zweite axiale Ausnehmung der Kulissenbahn drückt. Dies stellt eine vorteilhafte Realisierung der Verdrehsicherung dar. Der Benutzer kann über das Druckelement den Umstelltopf mit seinem Topfboden gegen die Basiskontaktfläche des Basiskörpers und/oder mit seiner Betätigungsnase in die betreffende axiale Ausnehmung der Kulissenbahn drücken. Im ersteren Fall ergibt sich die Sperrstellung der Verdrehsicherung durch den Reibschluss von Topfboden und Basiskontaktfläche, in letzterem Fall durch den Formschluss von Betätigungsnase und Kulissenbahnausnehmung. Alternativ sind andere, an sich bekannte Realisierungen für die Verdrehsicherung verwendbar, z.B. ein Sperrstift, der in fluchtende Öffnungen am Umstelltopf einerseits und am Basiskörper andererseits eingefügt werden kann.

Die erfindungsgemäße Sanitärbrause beinhaltet einen Brausekopf, der zur Fluidabgabe in wahlweise einer von mehreren Brausestrahlarten eingerichtet ist und einen Brauseeinlass sowie einen ersten Brauseauslass für eine erste Brausestrahlart und einen zweiten Brauseauslass für eine zweite Brausestrahlart aufweist, und die erfindungsgemäße Fluidumstellvorrichtung, die dafür eingerichtet ist, wahlweise den ersten oder den zweiten Brauseauslass mit dem Brauseeinlass in Fluidverbindung zu bringen.

Diese Sanitärbrause macht folglich vorteilhaft Verwendung von der erfindungsgemäßen Fluidumstellvorrichtung zu dem Zweck, die Sanitärbrause zwischen verschiedenen möglichen Brausestrahlarten umstellen zu können. Wie oben erläutert, ist diese Verwendung der erfindungsgemäßen Fluidumstellvorrichtung insbesondere für Brausen nützlich, bei denen nie oder allenfalls selten zwischen den Brausestrahlarten umgestellt werden soll.

In einer Weiterbildung der Erfindung ist die Sanitärbrause eine Kopfbrause, und der Basiskörper ist von einem eintrittsseitigen Teil des Brausekopfes gebildet. Dies stellt eine konstruktiv vorteilhafte Nutzung der erfindungsgemäßen Fluidumstellvorrichtung in einer Kopfbrause dar. Durch die Integration des Basiskörpers in den eintrittsseitigen Teil des Brausekopfes lässt sich der für die Fluidumstellvorrichtung benötigte Platzbedarf gering halten. Insbesondere kann daher eine entsprechende erfindungsgemäße Kopfbrause im Wesentlichen gleiche Außenabmessungen aufweisen wie eine herkömmliche Kopfbrause ohne die erfindungsgemäße Fluidumstellvorrichtung aber ansonsten analogem Brausekopfaufbau.

In einer Ausgestaltung der Erfindung beinhaltet die Sanitärbrause ein Kugelgelenk zur Verschwenkung des Brausekopfes um einen Anschlusskörper auf, wobei der Anschlusskörper eine hohle Gelenkkugel, die Bestandteil des Basiskörpers ist und in welcher der Umstelltopf aufgenommen ist, und einen Rohranschlussabschnitt umfasst. Weiter beinhaltet die Sanitärbrause in diesem Fall einen in den Rohranschlussabschnitt einfügbaren Rohranschlussstutzen, der als das Druckelement der Verdrehsicherung fungiert. Damit wird vorteilhaft das zum Verschwenken des Brausekopfes dienende Kugelgelenk zusätzlich zur Integration der erfindungsgemäßen Fluidumstellvorrichtung genutzt. Es sei an dieser Stelle angemerkt, dass vorliegend der Begriff Rohr in allgemeinem Sinn benutzt ist und daher insbesondere sowohl starre als auch flexible Rohre und Schläuche bzw. deren Teile umfasst.

Vorteilhafte Ausführungsformen der Erfindung sind in den Zeichnungen dargestellt. Diese und weitere Ausführungsformen der Erfindung werden nachfolgend näher erläutert.

Dabei zeigen:
- Fig. 1: eine perspektivische Explosionsansicht einer zur Verwendung in einer Brause geeigneten Fluidumstellvorrichtung,
- Fig. 2: eine Perspektivansicht eines als Umstelltopf konfigurierten Umstellelements der Fluidumstellvorrichtung,
- Fig. 3: eine Perspektivansicht eines Basiskörpers der Fluidumstellvorrichtung mit integrierter Brausegelenkkugel,
- Fig. 4: eine Draufsicht auf die Fluidumstellvorrichtung mit dem Umstellelement in einer ersten Einstellposition,
- Fig. 5: die Ansicht von Fig. 4 mit dem Umstellelement in einer zweiten Einstellposition,
- Fig. 6: eine ausschnittweise Längsschnittansicht einer als Kopfbrause konfigurierten Sanitärbrause mit der Fluidumstellvorrichtung der Fig. 1 bis 5 und dem Umstellelement in der zweiten Einstellposition,
- Fig. 7: eine Längsschnittansicht eines die Fluidumstellvorrichtung enthaltenden Teils von Fig. 6 in einer zu Fig. 6 senkrechten Schnittebene,
- Fig. 8: eine Längsschnittansicht ähnlich Fig. 7 mit dem Umstellelement in der ersten Einstellposition und
- Fig. 9: eine Längsschnittansicht der Fluidumstellvorrichtung in einer zu denjenigen der Fig. 6 und 7 gedrehten Schnittebene.

Wie in den Figuren anhand der dort gezeigten Ausführung veranschaulicht, beinhaltet die erfindungsgemäße sanitäre Fluidumstellvorrichtung einen Basiskörper 1, ein Umstellelement 7 im Basiskörper 1 und eine Verdrehsicherung 9. Der Basiskörper 1 weist einen Fluideinlass 2 sowie einen ersten Fluidauslass 3 und einen zweiten Fluidauslass 4 auf. Ein erster Fluidweg 5 führt vom Fluideinlass 2 zum ersten Fluidauslass 3, ein zweiter Fluidweg 6 führt vom Fluideinlass 2 zum zweiten Fluidauslass 4. Je nach Bedarf und Anwendungsfall können ein oder mehrere weitere Fluidauslässe mit zugehörigen Fluidwegen vorgesehen sein.

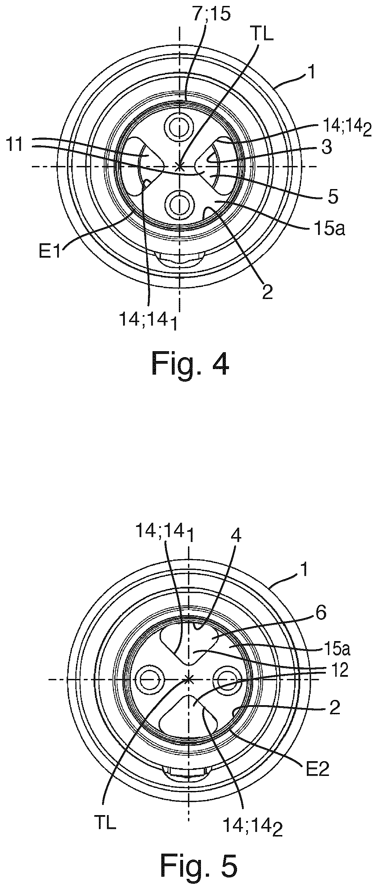

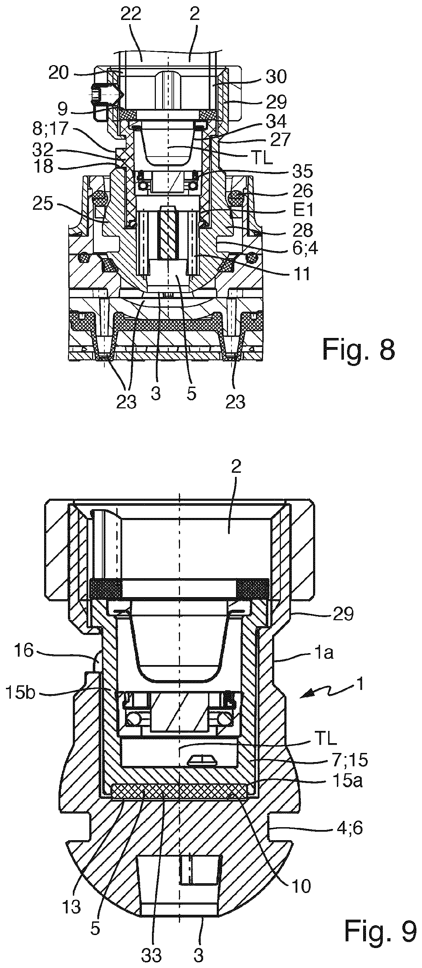

Das Umstellelement 7 ist im Basiskörper 1 zwischen einer ersten Einstellposition E1, siehe beispielsweise die Figuren 4 und 8, und einer zweiten Einstellposition E2, siehe beispielsweise die Figuren 5, 6 und 7, beweglich angeordnet, um damit wahlweise den ersten Fluidweg 5 und den zweiten Fluidweg 6 absperren bzw. freigeben zu können. Dazu gibt das Umstellelement 7 in der ersten Einstellposition E1 den ersten Fluidweg 5 zumindest partiell frei, im gezeigten Beispiel vollständig, und sperrt den zweiten Fluidweg 6 zumindest partiell ab, im gezeigten Beispiel vollständig. Analog sperrt das Umstellelement 7 in der zweiten Einstellposition E2 den ersten Fluidweg 5 zumindest partiell ab, im gezeigten Beispiel vollständig, und gibt den zweiten Fluidweg 6 zumindest partiell frei, im gezeigten Beispiel vollständig. Des Weiteren beinhaltet die Fluidumstellvorrichtung ein am Umstellelement 7 ausgebildetes nutzerzugängliches Betätigungsglied 8 zum nutzerbetätigten Bewegen des Umstellelements 7 zwischen der ersten Umstellposition E1 und der zweiten Umstellposition E2.

Außerdem weist die Fluidumstellvorrichtung eine Verdrehsicherung 9 auf, die nutzerbetätigt zwischen einer Sperrstellung und einer Freigabestellung verstellbar ist. In der Sperrstellung sperrt die Verdrehsicherung 9 das Umstellelement 7 gegen nutzerbetätigtes Bewegen zwischen der ersten Einstellposition E1 und der zweiten Einstellposition E2. In der Freigabestellung gibt die Verdrehsicherung 9 das Umstellelement 7 zum nutzerbetätigten Bewegen zwischen der ersten Einstellposition E1 und der zweiten Einstellposition E2 frei.

In vorteilhaften Ausführungsformen beinhaltet der Basiskörper 1 eine Basiskontaktfläche 10 mit mindestens einer ersten Abgangsöffnung 11, die zum ersten Fluidauslass 3 führt, und mindestens einer zweiten Abgangsöffnung 12, die zum zweiten Fluidauslass 4 führt, und das Umstellelement 7 beinhaltet eine die Basiskontaktfläche 10 kontaktierende Gegenkontaktfläche 13 mit einer Durchlassöffnungskontur 14, die mit dem Fluideinlass 2 in Fluidverbindung steht und mindestens eine Durchlassöffnung beinhaltet. Im gezeigten Beispiel ist die Fluidumstellvorrichtung in dieser Weise konfiguriert, wobei die Durchlassöffnungskontur 14 zwei Durchlassöffnungen 14₁, 14₂ beinhaltet.

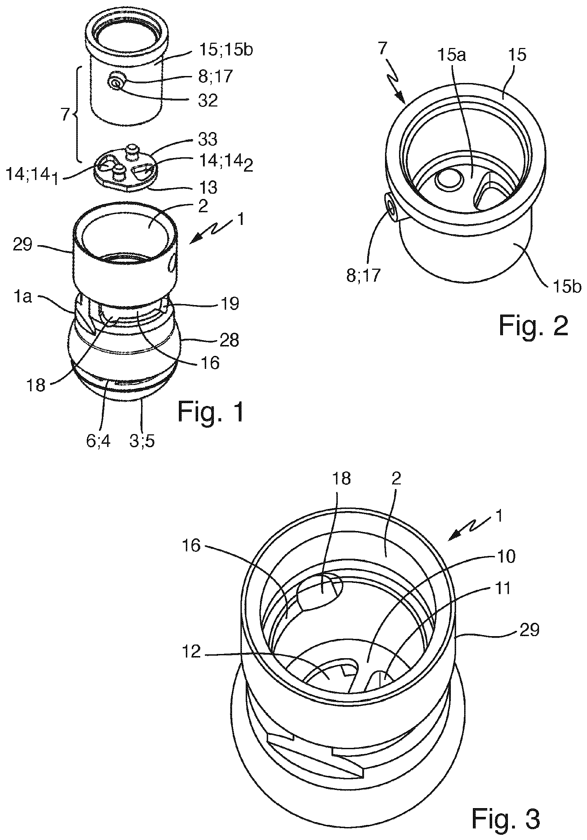

In vorteilhaften Ausführungsformen ist das Umstellelement 7, wie im gezeigten Beispiel, als ein Umstelltopf 15 mit einem Topfboden 15a konfiguriert, der die Gegenkontaktfläche 13 bildet. Das Betätigungsglied 8 steht von einer Mantelfläche 15b des Umstelltopfes 15 radial nach außen ab, wie beispielsweise aus den Figuren 1, 2, 7 und 8 zu erkennen. Die Bewegung des Umstelltopfes 15 zwischen der ersten Einstellposition E1 und der zweiten Einstellposition E2 ist in diesem Fall als Drehbewegung um eine Längsachse TL des Umstelltopfes 15 realisiert.

In entsprechenden Ausführungen weist der Basiskörper 1, wie im gezeigten Beispiel, einen den Umstelltopf 15 umfangsseitig umgebenden Hülsenteil 1a mit einer in Hülsenumfangsrichtung verlaufenden Kulissenbahn 16 auf, wie beispielsweise aus Fig. 1 ersichtlich. Konkret erstreckt sich die Kulissenbahn 16 im gezeigten Beispiel zwischen den beiden Einstellpositionen E1, E2 über einen Topfumfangswinkel von ca. 90°. Das Betätigungsglied 8 ist in diesem Fall als eine Betätigungsnase 17 konfiguriert, die in die Kulissenbahn 16 eingreift.

In vorteilhaften Realisierungen beinhaltet die Kulissenbahn 16 eine erste axiale Ausnehmung 18, in welche die Betätigungsnase 17 eingreift, wenn sich der Umstelltopf 15 in der ersten Einstellposition E1 befindet und die Verdrehsicherung 9 ihre Sperrstellung einnimmt, und/oder eine zweite axiale Ausnehmung 19, in welche die Betätigungsnase 17 eingreift, wenn sich der Umstelltopf 15 in der zweiten Einstellposition E2 befindet und die Verdrehsicherung 9 ihre Sperrstellung einnimmt. Im gezeigten Beispiel sind sowohl die erste axiale Ausnehmung 18 als auch die zweite axiale Ausnehmung 19 vorhanden, in alternativen Ausführungen nur eine der beiden Ausnehmungen 18, 19 oder keine von beiden.

In vorteilhaften Ausführungsformen weist die Verdrehsicherung 9 ein Druckelement 20 auf, das am Basiskörper 1 angebracht werden kann und vom Benutzer zwischen einer Sperrstellung und einer Freigabestellung verstellt werden kann, um die betreffende Sperrstellung bzw. Freigabestellung der Verdrehsicherung 9 bereitzustellen. In der Sperrstellung übt das Druckelement 20 eine axiale Druckkraft auf den Umstelltopf 15 aus, die den Umstelltopf 15 gegen Verdrehen sichernd mit seinem Topfboden 15a axial gegen die Basiskontaktfläche 10 andrückt und/oder mit seiner Betätigungsnase 17 in die erste axiale Ausnehmung 18 oder die zweite axiale Ausnehmung der Kulissenbahn 16 drückt. Das gezeigte Beispiel weist die Verdrehsicherung 9 in dieser Konfiguration auf, wobei der Umstelltopf 15 sowohl durch Reibschluss des gegen die Basiskontaktfläche 10 angedrückten Topfbodens 15a als auch durch Formschluss seiner in die betreffende axiale Ausnehmung 18, 19 gedrückt gehaltenen Betätigungsnase 17 gegen Verdrehen gesichert wird.

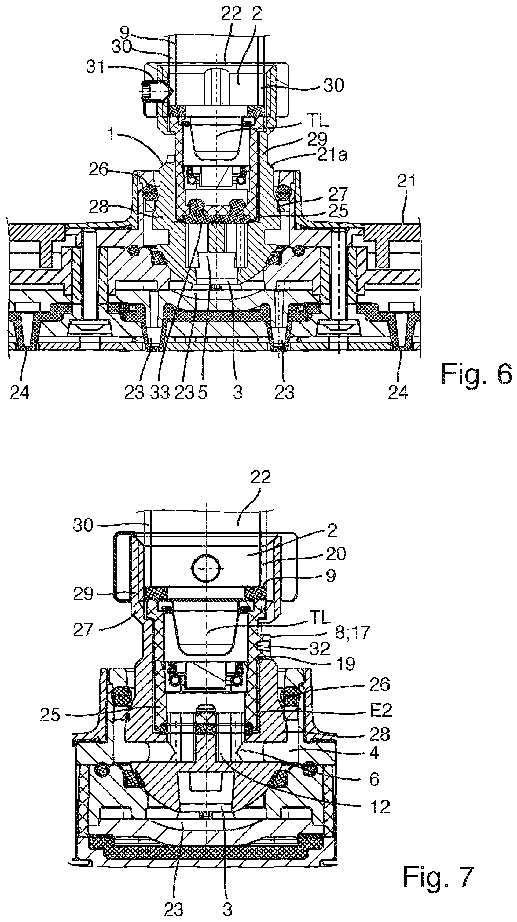

Wie ebenfalls in den Figuren anhand einer exemplarischen Ausführung veranschaulicht, umfasst die erfindungsgemäße Sanitärbrause einen Brausekopf 21, der zur Fluidabgabe in wahlweise einer von mehreren Brausestrahlarten eingerichtet ist und dazu in an sich bekannter Weise einen Brauseeinlass 22 sowie einen ersten Brauseauslass 23 für eine erste Brausestrahlart und einen zweiten Brauseauslass 24 für eine zweite Brausestrahlart aufweist. Fig. 6 zeigt die exemplarische Ausführung der Sanitärbrause in einer ausschnittweisen Längsschnittansicht ihres vorliegend interessierenden Teils, wobei es sich hierbei insbesondere um eine Kopfbrause handeln kann. Die beiden verschiedenen Brausestrahlarten können beispielsweise ein sanfter Strahl und ein Massagestrahl sein oder ein nebelartig feiner Brausestrahl und ein regenartiger Brausestrahl. Die beiden Brauseauslässe 23, 24 sind durch zugehörige Strahlaustrittsöffnungen des Brausekopfes 21 repräsentiert, wobei je nach Systemausführung den verschiedenen Strahlarten jeweils eigene Strahlaustrittsöffnungen zugeordnet sein können oder die jeweilige Strahlaustrittsöffnung durch andersartige Fluidbeschickung und geeignete Auslegung beide Strahlarten abgeben kann.

Die erfindungsgemäße Sanitärbrause ist mit einer sanitären Fluidumstellvorrichtung 25 ausgerüstet, bei der es sich um eine erfindungsgemäße sanitäre Fluidumstellvorrichtung handelt, im gezeigten Beispiel insbesondere um eine Fluidumstellvorrichtung der in den Figuren 1 bis 5 und 9 gezeigten Art. Die Fluidumstellvorrichtung 5 ist dafür eingerichtet, wahlweise den ersten oder den zweiten Brauseauslass 23, 24 mit dem Brauseeinlass 22 in Fluidverbindung zu bringen. Dazu steht der erste Brauseauslass 23 mit dem ersten Fluidauslass 3 der Fluidumstellvorrichtung 25 und der zweite Brauseauslass 24 mit dem zweiten Fluidauslass 4 der Fluidumstellvorrichtung 25 in Fluidverbindung.

Speziell kann es sich bei der Sanitärbrause um eine Kopfbrause handeln, bei welcher der Basiskörper 1 der Fluidumstellvorrichtung 25 von einem eintrittsseitigen Teil 21a des Brausekopfes 21 gebildet ist, wie im gezeigten Beispiel realisiert.

In vorteilhaften Ausführungen umfasst die Sanitärbrause, wie im gezeigten Beispiel, ein Kugelgelenk 26 zur Verschwenkung des Brausekopfes 21 um einen Anschlusskörper 27, der eine hohle Gelenkkugel 28 und einen Rohr- bzw. Schlauchanschlussabschnitt 29 aufweist. Die hohle Gelenkkugel 28 ist Bestandteil des Basiskörpers 1 und nimmt den Umstelltopf 15 auf, d.h. die Fluidumstellvorrichtung 25 ist in diesem Fall in den Kugelgelenkbereich der Sanitärbrause integriert.

Weiter beinhaltet die Sanitärbrause einen in den Rohranschlussabschnitt 29 in an sich bekannter Weise einfügbaren Rohr- bzw. Schlauchanschlussstutzen 30. Beispielsweise kann der Rohranschlussstutzen 30 in den Rohr-/Schlauchanschlussabschnitt 29 eingeschraubt oder in diesen eingesteckt und mittels einer Feststellschraube bzw. Spannschraube 31 in diesem gegen axiales Wegbewegen gesichert gehalten werden. Der Rohranschlussstutzen 30 fungiert hierbei im gezeigten Beispiel als das Druckelement 20 der Verdrehsicherung 9. Dazu drückt er in seinem in den Rohranschlussabschnitt 29 eingefügten Zustand axial gegen die zugewandte Stirnseite des Umstelltopfes 15, wodurch der Umstelltopf 15 mit seinem Topfboden 15a gegen die Basiskontaktfläche 10 des Basiskörpers 1 angedrückt und mit seiner Betätigungsnase 17 in eine der beiden axialen Ausnehmungen 19 der Kulissenbahn 16 gedrückt wird, wodurch sich die Verdrehsicherung 9 in ihrer Sperrstellung befindet.

Zum Lösen dieser Verdrehsicherung 9 bewegt der Benutzer den Rohranschlussstutzen 30 zumindest ein Stück weit axial aus dem Rohranschlussabschnitt 29 heraus, z.B. durch Aufschrauben des zugehörigen Gewindes bzw. nach Lösen der Feststellschraube 31, so dass der Reibschluss zwischen Topfboden 15a und Basiskontaktfläche 10 aufgehoben wird und der Benutzer durch Betätigen der Betätigungsnase 17 den Umstelltopf 18 axial so weit zurückbewegen kann, dass die Betätigungsnase 17 aus der betreffenden axialen Ausnehmung 18, 19 herausgelangt und der Umstelltopf 15 anschließend von der einen in die andere Einstellposition E1, E2 um seine Längsachse TL gedreht werden kann, wozu der Benutzer die Betätigungsnase 17 entsprechend entlang der Kulissenbahn 16 bewegt. Zur erleichterten Betätigung kann die Betätigungsnase 17, wie im gezeigten Beispiel, mit einer Werkzeugschnittstelle 32 versehen sein, beispielsweise zum Ansetzen eines Betätigungsstifts oder eines Schraubendrehers.

Im gezeigten Ausführungsbeispiel ist der Basiskörper 1 im Wesentlichen zylindrisch gestaltet und umfasst, wie schon erwähnt, den Hülsenteil 1a, der den Umstelltopf 15 umfangsseitig umgibt, und die Gelenkkugel 28 für das Kugelgelenk 26 der Brause sowie auch den Rohranschlussabschnitt 29 zum Einfügen des Rohranschlussstutzens 30. Der erste Fluidauslass 3 mündet axial aus diesem zylinderförmigen Basiskörper 1 aus, der zweite Fluidauslass 4 mündet radial nach außen aus dem zylindrischen Basiskörper 1 aus.

Die Basiskontaktfläche 10 ist in diesem gezeigten Beispiel mit zwei ersten Abgangsöffnungen 11 und zwei zweiten Abgangsöffnungen 12 versehen, die sich jeweils diametral gegenüberliegen und sich jeweils über einen Umfangswinkel von etwas weniger als 90° dreieckförmig von einem radialen Außenrand der beispielhaft kreisrunden Basiskontaktfläche 10 radial nach innen mit Abstand zum Mittelpunkt der Basiskontaktfläche 10 erstrecken. Korrespondierend dazu umfasst die Durchlassöffnungskontur 14 des Umstellelements 7 in der gezeigten Ausführung die beiden Durchlassöffnungen 14₁, 14₂ in diametral gegenüberliegender Dreieckform, wie beispielsweise aus den Figuren 1, 4 und 5 ersichtlich.

Im gezeigten Ausführungsbeispiel ist der Topfboden 15a des Umstelltopfes 15 mit einem Dichtkörper 33 versehen, der axial von außen auf die Topfbodenfläche aufgeclipst werden kann und für die benötigte Fluiddichtheit sowie für den verdrehsichernden Reibschluss mit der Basiskontaktfläche 10 des Basiskörpers 1 sorgt. In Fig. 9 ist die reibschlüssige und dichtende Anlage des scheibenförmigen Dichtkörpers 33 gegen die Basiskontaktfläche 10 des Basiskörper 1 deutlich zu erkennen.

Der Umstelltopf 15 weist in entsprechenden Ausführungen einen Aufnahmeraum zum Aufnehmen eines oder mehrerer weiterer Funktionselemente auf. Im gezeigten Beispiel sind im Umstelltopf 15 ein Partikelsieb 34 und ein Durchflussbegrenzer 35 aufgenommen, siehe z.B. Fig. 9. Zusätzlich oder alternativ kann im Umstelltopf 15 z.B. auch ein Rückflussverhinderer bzw. ein Rückschlagventil aufgenommen sein.

Fig. 4 zeigt in Draufsicht die Fluidumstellvorrichtung in der ersten Einstellposition E1 des Umstellelements 7, bei dem dieses über seine Durchlassöffnungen 14₁, 14₂ die Fluidverbindung vom stromaufwärtigen Fluideinlass 2 zu den ersten Abgangsöffnungen 11 und damit zum ersten Fluidweg 5 freigibt, der zum ersten Fluidauslass 3 führt.

Fig. 5 zeigt die Fluidumstellvorrichtung mit dem Umstellelement 7 in der dazu um 90° gedrehten, zweiten Einstellposition E2, in der die Fluidverbindung vom Fluideinlass 2 über die Durchlassöffnungen 14₁, 14₂ zu den zweiten Abgangsöffnungen 12 des Basiskörpers 1 und damit zum zweiten Fluidweg 6 freigegeben wird, der zum zweiten Fluidauslass 4 führt. Der jeweils andere Fluidweg 6 bzw. 5 wird im gezeigten Beispiel vollständig vom Umstellelement 7 abgesperrt, wenn es sich in der ersten bzw. zweiten Umstellposition E1, E2 befindet.

Wie die gezeigten und die weiteren erläuterten Ausführungsbeispiele deutlich machen, stellt die Erfindung in vorteilhafter Weise eine sanitäre Fluidumstellvorrichtung und eine damit ausrüstbare Sanitärbrause zur Verfügung, wobei die Fluidumstellvorrichtung bei Verwendung in der Sanitärbrause insbesondere die Möglichkeit bietet, die Sanitärbrause in ihrem Aufbau als für mehrere unterschiedliche Brausestrahlarten geeignet zu konfigurieren und dann durch die Fluidumstellvorrichtung in wählbarer und bei Bedarf auch veränderbarer Weise die tatsächlich von der Brause bereitgestellte Brausestrahlart bleibend einzustellen bzw. einzurichten. Die lässt sich hierbei problemlos ohne zusätzlichen signifikanten Platzbedarf in den Aufbau der Sanitärbrause integrieren.

Die sanitäre Fluidumstellvorrichtung kann wie erläutert insbesondere in Duschbrausen und speziell in Kopfbrausen zum Einsatz kommen. Es versteht sich jedoch, dass die Fluidumstellvorrichtung auch für Handbrausen und Badewannenarmaturen sowie andere Anwendungen, z.B. in der Gartenbewässerungstechnik, nutzbringend verwendbar ist, soweit jeweils Bedarf besteht, eine für mehrere Betriebsarten, z.B. Brausestrahlarten, ausgelegte Armatur auf eine bestimmte Betriebsart festlegen zu können, diese Festlegung jedoch bei Bedarf auch wieder ändern zu können.

## Patentansprüche

1. Sanitäre Fluidumstellvorrichtung, insbesondere für eine Brause, mit
- einem Basiskörper (1) mit einem Fluideinlass (2), mindestens einem ersten und einem zweiten Fluidauslass (3, 4), einem ersten Fluidweg (5) vom Fluideinlass (2) zum ersten Fluidauslass (3) und einem zweiten Fluidweg (6) vom Fluideinlass (2) zum zweiten Fluidauslass (4),
- einem im Basiskörper (1) zwischen einer ersten und einer zweiten Einstellposition (E1, E2) beweglich angeordneten Umstellelement (7) zum wahlweisen Absperren und Freigeben des ersten und des zweiten Fluidweges (5, 6), wobei das Umstellelement (7) in der ersten Einstellposition (E1) den ersten Fluidweg (5) zumindest partiell freigibt und den zweiten Fluidweg (6) zumindest partiell absperrt und in der zweiten Einstellposition (E2) den ersten Fluidweg (5) zumindest partiell absperrt und den zweiten Fluidweg (6) zumindest partiell freigibt, **gekennzeichnet durch**
- ein am Umstellelement (7) ausgebildetes, nutzerzugängliches Betätigungsglied (8) zum nutzerbetätigten Bewegen des Umstellelements (7) zwischen der ersten und der zweiten Umstellposition (E1, E2), und
- eine nutzerbetätigt zwischen einer Sperrstellung und einer Freigabestellung verstellbare Verdrehsicherung (9), die in der Sperrstellung das Umstellelement (7) gegen nutzerbetätigtes Bewegen zwischen der ersten und der zweiten Einstellposition (E1, E2) sperrt und in der Freigabestellung das Umstellelement (7) zum nutzerbetätigten Bewegen zwischen der ersten und der zweiten Einstellposition (E1, E2) freigibt.

2. Sanitäre Fluidumstellvorrichtung nach Anspruch 1, weiter **dadurch gekennzeichnet, dass** der Basiskörper (1) eine Basiskontaktfläche (10) mit mindestens einer ersten, zum ersten Fluidauslass (3) führenden Abgangsöffnung (11) und mindestens einer zweiten, zum zweiten Fluidauslass (4) führenden Abgangsöffnung (12) aufweist und das Umstellelement (7) eine die Basiskontaktfläche (10) kontaktierende Gegenkontaktfläche (13) mit mindestens einer Durchlassöffnungskontur (14) aufweist, die mit dem Fluideinlass (2) in Fluidverbindung steht und mindestens einer Durchlassöffnung (14₁, 14₂) beinhaltet.

3. Sanitäre Fluidumstellvorrichtung nach Anspruch 2, weiter **dadurch gekennzeichnet, dass** das Umstellelement (7) ein Umstelltopf (15) mit einem Topfboden (15a) ist, der die Gegenkontaktfläche (11) bildet, wobei das Betätigungsglied (8) von einer Mantelfläche (15b) des Umstelltopfes (15) radial nach außen absteht und die Bewegung des Umstelltopfes (15) zwischen der ersten und der zweiten Einstellposition (E1, E2) eine Drehbewegung um eine Längsachse (TL) des Umstelltopfes (15) ist.

4. Sanitäre Fluidumstellvorrichtung nach Anspruch 3, weiter **dadurch gekennzeichnet, dass** der Basiskörper (1) einen den Umstelltopf (15) umfangsseitig umgebenden Hülsenteil (1a) mit einer in Hülsenumfangsrichtung verlaufenden Kulissenbahn (16) aufweist und das Betätigungsglied (8) eine Betätigungsnase (17) ist, die in die Kulissenbahn (16) eingreift.

5. Sanitäre Fluidumstellvorrichtung nach Anspruch 4, weiter **dadurch gekennzeichnet, dass** die Kulissenbahn (16) eine erste axiale Ausnehmung (18) aufweist, in welche die Betätigungsnase (17) eingreift, wenn sich der Umstelltopf (15) in der ersten Einstellposition (E1) und die Verdrehsicherung (9) in der Sperrstellung befinden und/oder eine zweite axiale Ausnehmung (19) aufweist, in welche die Betätigungsnase (17) eingreift, wenn sich der Umstelltopf (15) in der zweiten Einstellposition (E2) und die Verdrehsicherung (9) in der Sperrstellung befinden.

6. Sanitäre Fluidumstellvorrichtung nach Anspruch 4 oder 5, weiter **dadurch gekennzeichnet, dass** die Verdrehsicherung (9) ein am Basiskörper (1) zwischen einer Sperrstellung und einer Freigabestellung nutzerbetätigt verstellbar anbringbares Druckelement (20) aufweist, das in seiner Sperrstellung eine axiale Druckkraft auf den Umstelltopf (15) ausübt, die ihn verdrehsichernd mit seinem Topfboden (15a) axial gegen die Basiskontaktfläche (10) andrückt und/oder mit seiner Betätigungsnase (17) in die erste oder zweite axiale Ausnehmung (18, 19) der Kulissenbahn (16) drückt.

7. Sanitärbrause, insbesondere sanitäre Kopfbrause, mit
- einem Brausekopf (21), der zur Fluidabgabe in wahlweise einer von mehreren Brausestrahlarten eingerichtet ist und einen Brauseeinlass (22) sowie einen ersten Brauseauslass (23) für eine erste Brausestrahlart und einen zweiten Brauseauslass (24) für eine zweite Brausestrahlart aufweist, und
- einer sanitären Fluidumstellvorrichtung (25), die dafür eingerichtet ist, wahlweise den ersten oder den zweiten Brauseauslass (23, 24) mit dem Brauseeinlass (22) in Fluidverbindung zu bringen,
**dadurch gekennzeichnet, dass**
- die sanitäre Fluidumstellvorrichtung (25) eine solche nach einem der Ansprüche 1 bis 6 ist.

8. Sanitärbrause nach Anspruch 7, weiter **dadurch gekennzeichnet, dass** sie eine Kopfbrause ist und der Basiskörper (1) von einem eintrittsseitigen Teil (21a) des Brausekopfes (21) gebildet ist.

9. Sanitärbrause nach Anspruch 8, weiter **dadurch gekennzeichnet, dass** sie ein Kugelgelenk (26) zur Verschwenkung des Brausekopfes (21) um einen Anschlusskörper (27), der eine hohle Gelenkkugel (28), die Bestandteil des Basiskörpers (1) ist und in welcher der Umstelltopf (15) aufgenommen ist, und einen Rohranschlussabschnitt (29) aufweist, und einen in den Rohranschlussabschnitt (29) einfügbaren Rohranschlussstutzen (30) umfasst, der als das Druckelement (20) der Verdrehsicherung (9) fungiert.

## Claims

1. Sanitary fluid switching device, preferably for a shower, comprising
- a base body (1) having a fluid inlet (2), at least a first and a second fluid outlet (3, 4), a first fluid path (5) from the fluid inlet (2) to the first fluid outlet (3) and a second fluid path (6) from the fluid inlet (2) to the second fluid outlet (4),
- a switching element (7) for selectively blocking and unblocking the first and the second fluid path (5, 6), the element being arranged in the base body (1) movably between a first and a second setting position (E1, E2), wherein in the first setting position (E1) the switching element (7) at least partially unblocks the first fluid path (5) and at least partially blocks the second fluid path (6), and in the second setting position (E2) at least partially blocks the first fluid path (5) and at least partially unblocks the second fluid path (6),
**characterized by**
- a user-accessible actuating member (8), which is formed on the switching element (7), for moving the switching element (7) between the first and the second switching position (E1, E2) in a user-actuated manner, and
- a user-actuated rotation preventer (9) which is movable between a blocking position and an unblocking position, the preventer, when in the blocking position, blocking the switching element (7) from being moved by user-actuation between the first and the second setting position (E1, E2) and, when in the unblocking position, unblocking the switching element (7) for user-actuated movement between the first and the second setting position (E1, E2).

2. Sanitary switching device according to claim 1, further **characterized in that** the base body (1) comprises a base contact surface (10) having at least a first outflow opening (11) leading to the first fluid outlet (3) and at least a second outflow opening (12) leading to the second fluid outlet (4), and the switching element (7) has a mating contact surface (13) which contacts the base contact surface (10), the mating contact surface having at least one passage opening contour (14) which is in fluid connection with the fluid inlet (2) and contains at least one passage opening (14₁, 14₂).

3. Sanitary fluid switching device according to claim 2, further **characterized in that** the switching element (7) is a switching pot (15) having a pot base (15a) constituting the mating contact surface (11), wherein the actuating member (8) protrudes radially outward from a lateral surface (15b) of the switching pot (15) and the movement of the switching pot (15) between the first and the second setting position (E1, E2) is a rotating movement about a longitudinal axis (TL) of the switching pot (15).

4. Sanitary fluid switching device according to claim 3, further **characterized in that** the base body (1) comprises a sleeve part (1a) which surrounds the switching pot (15) peripherally and has a slot path (16) running in the peripheral direction of the sleeve and the actuating member (8) is an actuating lug (17) which reaches into the slot path (16).

5. Sanitary fluid switching device according to claim 4, further **characterized in that** the slot path (16) comprises a first axial recess (18) into which the actuating lug reaches when the switching pot (15) is located in the first setting position (E1) and the rotation preventer (9) is located in the blocking position and/or a second axial recess (19) into which the actuating lug (17) reaches when the switching pot (15) is located in the second setting position (E2) and the rotation preventer (9) is located in the blocking position.

6. Sanitary fluid switching device according to claim 4 or 5, further **characterized in that** the rotation preventer (9) comprises a pressure element (20) which can be attached on the base body (1), adjustably by means of user-actuation, between a blocking position and an unblocking position, the pressure element exerting an axial pressure force on the switching pot (15) in the blocking position of the pressure element, the pressure force pressing the switching pot base (15a) axially against the base contact surface (10) in a rotation-preventing manner, and/or pressing the actuating lug (17) of the switching pot into the first or second axial recess (18, 19) of the slot path (16).

7. Sanitary shower, preferably a sanitary overhead shower, comprising
- a shower head (21) configured for selectively issuing fluid in one or more types of spray streams and comprising a shower inlet (22) and a first shower outlet (23) for a first type of spray stream and a second shower outlet (24) for a second type of spray stream, and
- a sanitary fluid switching device (25) configured to selectively bring the first or the second shower outlet (23, 24) into fluid connection with the shower inlet (22), **characterized in that**
- the sanitary fluid switching device (25) is a device according to one of claims 1 to 6.

8. Sanitary shower according to claim 7, further **characterized in that** it is an overhead shower and the base body (1) is constituted by an inlet-side part (21a) of the shower head (21).

9. Sanitary shower according to claim 8, further **characterized in that** it includes a ball joint (26) for tilting the shower head (21) about a connecting body (27), the connecting body comprising a hollow joint ball (28) that is part of the base body (1) and inside of which the switching pot (15) is accommodated and a pipe connection section (29), and a pipe connection stub (30) that can be inserted into the pipe connection section (29) and that functions as the pressure element (20) of the rotation preventer (9).

## Revendications

1. Dispositif sanitaire de commutation de fluide, notamment pour une douche, comprenant
- un corps de base (1) pourvu d'une entrée de fluide (2), d'au moins une première et une deuxième sortie de fluide (3, 4), d'un premier circuit de fluide (5) allant de l'entrée de fluide (2) à la première sortie de fluide (3), et d'un deuxième circuit de fluide (6) allant de l'entrée de fluide (2) à la deuxième sortie de fluide (4),
- un élément de commutation (7) disposé dans le corps de base (1) de manière mobile entre une première et une deuxième position de réglage (E1, E2) pour obturer et libérer au choix les premier et deuxième circuits de fluide (5, 6), sachant que dans la première position de réglage (E1), l'élément de commutation (7) libère au moins partiellement le premier circuit de fluide (5) et obture au moins partiellement le deuxième circuit de fluide (6), et que dans la deuxième position de réglage (E2), il obture au moins partiellement le premier circuit de fluide (5) et libère au moins partiellement le deuxième circuit de fluide (6),
**caractérisé par**
- un organe d'actionnement (8) formé sur l'élément de commutation (7) et accessible à l'utilisateur, destiné à déplacer, sous l'action de l'utilisateur, l'élément de commutation (7) entre les première et deuxième positions de commutation (E1, E2), et
- un dispositif anti-rotation (9) qui est réglable, sous l'action de l'utilisateur, entre une position d'obturation et une position de libération et qui, en position d'obturation, bloque l'élément de commutation (7) pour l'empêcher d'être déplacé par l'utilisateur entre les première et deuxième positions de réglage (E1, E2) et qui, en position de libération, libère l'élément de commutation (7) pour qu'il puisse être déplacé sous l'action de l'utilisateur entre les première et deuxième positions de réglage (E1, E2).

2. Dispositif sanitaire de commutation de fluide selon la revendication 1, **caractérisé en outre en ce que** le corps de base (1) présente une surface de contact de base (10) pourvue d'au moins une première ouverture de sortie (11) menant à la première sortie de fluide (3) et d'au moins une deuxième ouverture de sortie (12) menant à la deuxième sortie de fluide (4), et **en ce que** l'élément de commutation (7) présente une surface de contact antagoniste (13) venant en contact avec la surface de contact de base (10) et pourvue d'au moins un contour d'ouverture de passage (14) qui est en communication fluidique avec l'entrée de fluide (2) et qui comprend au moins une ouverture de passage (14₁, 14₂).

3. Dispositif sanitaire de commutation de fluide selon la revendication 2, **caractérisé en outre en ce que** l'élément de commutation (7) est un pot de commutation (15) pourvu d'un fond de pot (15a) qui forme la surface de contact antagoniste (11), l'organe d'actionnement (8) faisant saillie radialement vers l'extérieur à partir d'une surface latérale (15b) du pot de commutation (15), et le mouvement du pot de commutation (15) entre les première et deuxième positions de réglage (E1, E2) étant un mouvement de rotation autour d'un axe longitudinal (TL) du pot de commutation (15).

4. Dispositif sanitaire de commutation de fluide selon la revendication 3, **caractérisé en outre en ce que** le corps de base (1) comporte une partie formant manchon (1a) qui entoure le pot de commutation (15) sur sa circonférence et est pourvue d'une glissière (16) s'étendant dans la direction circonférentielle du manchon, et **en ce que** l'organe d'actionnement (8) est un ergot d'actionnement (17) qui s'engage dans la glissière (16).

5. Dispositif sanitaire de commutation de fluide selon la revendication 4, **caractérisé en outre en ce que** la glissière (16) comporte un premier évidement axial (18) dans lequel s'engage l'ergot d'actionnement (17) lorsque le pot de commutation (15) se trouve dans la première position de réglage (E1) et que le dispositif anti-rotation (9) se trouve en position d'obturation, et/ou comporte un deuxième évidement axial (19) dans lequel s'engage l'ergot d'actionnement (17) lorsque le pot de commutation (15) se trouve dans la deuxième position de réglage (E2) et que le dispositif anti-rotation (9) se trouve en position d'obturation.

6. Dispositif sanitaire de commutation de fluide selon la revendication 4 ou 5, **caractérisé en outre en ce que** le dispositif anti-rotation (9) comporte un élément de pression (20) pouvant être monté sur le corps de base (1) de manière à être réglable sous l'action de l'utilisateur entre une position de blocage et une position de déblocage, lequel, dans sa position de blocage, exerce une force de pression axiale sur le pot de commutation (15) pour presser axialement son fond de pot (15a) contre la surface de contact de base (10) de manière à l'empêcher de tourner, et/ou pour presser son ergot d'actionnement (17) dans le premier ou le deuxième évidement axial (18, 19) de la glissière (16).

7. Douche sanitaire, en particulier douche de tête sanitaire, comprenant
- un pommeau de douche (21) qui est agencé pour distribuer un fluide selon, au choix, l'un parmi plusieurs types de jets de douche et qui comporte une entrée de douche (22) ainsi qu'une première sortie de douche (23) pour un premier type de jet de douche et une deuxième sortie de douche (24) pour un deuxième type de jet de douche, et
- un dispositif sanitaire de commutation de fluide (25) agencé pour mettre sélectivement la première ou la deuxième sortie de douche (23, 24) en communication fluidique avec l'entrée de douche (22),
**caractérisée en ce que**
- le dispositif sanitaire de commutation de fluide (25) est un dispositif selon l'une des revendications 1 à 6.

8. Douche sanitaire selon la revendication 7,
**caractérisée en outre en ce qu'**il s'agit d'une douche de tête et **en ce que** le corps de base (1) est formé par une partie côté entrée (21a) du pommeau de douche (21).

9. Douche sanitaire selon la revendication 8,
**caractérisée en outre en ce qu'**elle comporte une articulation à rotule (26) permettant le pivotement du pommeau de douche (21) autour d'un corps de raccordement (27) comprenant une rotule creuse (28) qui fait partie intégrante du corps de base (1) et dans laquelle est logé le pot de commutation (15), ainsi qu'une section de raccordement de tuyau (29), et **en ce qu'**elle comporte un manchon de raccordement de tuyau (30) qui peut être inséré dans la section de raccordement de tuyau (29) et qui fait office d'élément de pression (20) du dispositif anti-rotation (9).
